(19) Europäisches Patentamt
European Patent Office
Office européen des brevets

(11) EP 4 692 887 A1

(12) EUROPEAN PATENT APPLICATION
published in accordance with Art. 153(4) EPC

(43) Date of publication:
11.02.2026 Bulletin 2026/07

(51) International Patent Classification (IPC):
*G02B 15/10* (2006.01)

(21) Application number: 24780109.5

(52) Cooperative Patent Classification (CPC):
G02B 15/10

(22) Date of filing: 25.03.2024

(86) International application number:
PCT/JP2024/011557

(87) International publication number:
WO 2024/203991 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.03.2023 JP 2023049903

(71) Applicant: MITSUBISHI GAS CHEMICAL
COMPANY, INC.
Chiyoda-ku
Tokyo 100-8324 (JP)

(72) Inventor: TAKASE, Yuki
Tokyo 100-8324 (JP)

(74) Representative: Müller-Boré & Partner
Patentanwälte PartG mbB
Friedenheimer Brücke 21
80639 München (DE)

(54) **ATTACHMENT LENS**

(57) The present disclosure relates to an attachment lens including a first lens having positive or negative optical power, a second lens having positive optical power, and a third lens having positive or negative optical power in order from an object side, wherein each of both surfaces of the first lens, the second lens, and the third lens is an aspheric surface, and the attachment lens satisfies the following expressions (1), (2), (3), (4), (5), and (6):

$$(1)\ -10.0 \leq f1/f \leq 8.00$$

$$(2)\ -0.1500 \leq \varphi1/\nu1 \leq 0.0500$$

$$(3)\ 0.100 \leq \varphi2/n2 \leq 2.000$$

$$(4)\ -80.0 \leq f3/f \leq 30.0$$

$$(5)\ -0.300 \leq \varphi3/n3 \leq 0.900$$

$$(6)\ -0.0200 \leq \varphi3/\nu3 \leq 0.0500$$

[Fig.1]

## Description

### Technical Field

The present disclosure relates to an attachment lens, particularly, an attachment lens that is mounted in front of an imaging lens and can thereby achieve microscopic and high-resolution optical characteristics.

### Background Art

Attachment lenses are known as optical elements that are mounted to imaging lenses and can thereby change the performance or application of the imaging lenses. Examples of attachment lenses include attachment lenses that change angles of view, and attachment lenses that change magnifications, for example, and also include attachment lenses that are mounted on an imaging object side of imaging lenses, and attachment lenses that are mounted on an image side of imaging lenses, for example.

For example, as for the attachment lenses that are mounted on an imaging object side of imaging lenses, Patent Literatures 1 and 2 each disclose a lens having a function of widening an angle of view.

### Citation List

### Patent Literature

Patent Literature 1: Japanese Patent Laid-Open No. 2002-214529
Patent Literature 2: Japanese Patent Laid-Open No. 2020-144177

### Summary of Invention

### Technical Problem

However, an imaging lens is designed so as to focus primarily on exerting optical performance in itself. In general, an attachment lens mounted thereto disrupts aberration balance and often deteriorates optical performance in the whole optical system including the imaging lens and the attachment lens.

Accordingly, an object of the present invention is to provide an attachment lens that, even if mounted to an existing imaging lens, does not deteriorate the whole optical performance and enables observation of a fine target object with a wide field of view and high resolution.

### Solution to Problem

An attachment lens according to one embodiment of the present invention comprises a first lens having positive or negative optical power, a second lens having positive optical power, and a third lens having positive or negative optical power in order from an object side, wherein each of both surfaces of the first lens, the second lens, and the third lens is an aspheric surface, and the attachment lens satisfies the following expressions (1), (2), (3), (4), (5), and (6):

$$(1)\ -10.0 \leq f1/f \leq 8.00$$

$$(2)\ -0.1500 \leq \phi1/\nu1 \leq 0.0500$$

$$(3)\ 0.100 \leq \phi2/n2 \leq 2.000$$

$$(4)\ -80.0 \leq f3/f \leq 30.0$$

$$(5)\ -0.300 \leq \phi3/n3 \leq 0.900$$

$$(6)\ -0.0200 \leq \phi3/\nu3 \leq 0.0500$$

f: a focal length of the entire system of the attachment lens with respect to the d line,
f1: a focal length of the first lens with respect to the d line,
$\phi1$: a product of power of the first lens with respect to the d line and f, expressed as f/f1,
v1: an Abbe number of the first lens,
f2: a focal length of the second lens with respect to the d line,
$\phi2$: a product of power of the second lens with respect to the d line and f, expressed as f/f2,
n2: a refractive index of the second lens with respect to the d line,
f3: a focal length of the third lens with respect to the d line,
$\phi3$: a product of power of the third lens with respect to the d line and f, expressed as f/f3,
n3: a refractive index of the third lens with respect to the d line, and
v3: an Abbe number of the third lens.

The attachment lens described above satisfies the expressions (1) to (6) and, even if mounted to an existing imaging lens, can thereby suppress deterioration in the flatness of an image plane in the whole optical system including the imaging lens and the attachment lens. In proximity to an object to be imaged, the attachment lens allows for observation in a wide range and can suppress chromatic aberration in the whole optical system including the imaging lens and the attachment lens.

The attachment lens of the above embodiment preferably further satisfies the expressions (7) and (8) given below. According to this aspect, the attachment lens satisfies the expression (7) given below and can thereby further suppress deterioration in the flatness of an image plane in the whole optical system including the imaging lens and the attachment lens; and the attachment lens satisfies the expression (8) given below and can thereby further suppress chromatic aberration in the whole optical system including the imaging lens and the attachment lens.

$$(7)\ 0.000 \leq P \leq 0.800$$

$$(8)\ -0.0600 \leq Q \leq 0.0500$$

P: the sum of $\phi1/n1$, $\phi2/n2$, and $\phi3/n3$,
Q: the sum of $\phi1/\nu1$, $\phi2/\nu2$, and $\phi3/\nu3$,
n1: a refractive index of the first lens with respect to the d line, and
v2: an Abbe number of the second lens.

The attachment lens of the above embodiment preferably further satisfies the expressions (9), (10), and (11) given below. According to this aspect, the attachment lens can further suppress deterioration in the flatness of an image plane in the whole optical system including the imaging lens and the attachment lens. The attachment lens satisfying the expression (8) can also further suppress chromatic aberration in the whole optical system including the imaging lens and the attachment lens.

$$(9)\ -1.500 \leq \varphi1/n1 \leq 0.300$$

$$(10)\ 0.500 \leq f2/f \leq 3.50$$

$$(11)\ 0.0050 \leq \varphi2/\nu2 \leq 0.0400$$

n1: a refractive index of the first lens with respect to the d line, and
v2: an Abbe number of the second lens.

In the attachment lens of the above embodiment, preferably, each of the first lens, the second lens, and the third lens is formed of a non-fluorescent material. According to this aspect, the attachment lens, for example, when used in an analysis apparatus using ultraviolet light, can prevent fluorescence from being generated due to the ultraviolet light in each lens and from becoming noise in measurement. In short, the attachment lens of this aspect is preferably used as an attachment lens in an analysis apparatus using ultraviolet light.

In the attachment lens of the above embodiment, preferably, each of the first lens, the second lens, and the third lens is constituted by a non-fluorescent material, and further, the attachment lens satisfies the expressions (1'), (2'), (3'), (4'), (5'), and (6') given below. According to this aspect, the attachment lens can be preferably used as an attachment lens in an analysis apparatus using ultraviolet light and furthermore, can further suppress deterioration in the flatness of an image plane and chromatic aberration in the whole optical system including the imaging lens and the attachment lens.

$$(1') \; -8.50 \leq f1/f \leq 5.60$$

$$(2') \; -0.0900 \leq \varphi1/\nu1 \leq 0.0150$$

$$(3') \; 0.200 \leq \varphi2/n2 \leq 1.100$$

$$(4') \; -67.0 \leq f3/f \leq 20.0$$

$$(5') \; -0.170 \leq \varphi3/n3 \leq 0.640$$

$$(6') \; -0.0090 \leq \varphi3/\nu3 \leq 0.0180$$

The attachment lens of the above embodiment preferably further satisfies the expressions (7') and (8') given below in addition to the expressions (1'), (2'), (3'), (4'), (5'), and (6'). According to this aspect, the attachment lens can be preferably used as an attachment lens in an analysis apparatus using ultraviolet light and furthermore, can further suppress deterioration in the flatness of an image plane and chromatic aberration in the whole optical system including the imaging lens and the attachment lens.

$$(7') \; 0.000 \leq P \leq 0.680$$

$$(8') \; -0.0450 \leq Q \leq 0.0250$$

P: the sum of $\phi1/n1$, $\phi2/n2$, and $\phi3/n3$,
Q: the sum of $\phi1/\nu1$, $\phi2/\nu2$, and $\phi3/\nu3$,
n1: a refractive index of the first lens with respect to the d line, and
$\nu2$: an Abbe number of the second lens.

The attachment lens of the above embodiment preferably further satisfies the expressions (9'), (10'), and (11') given below in addition to the expressions (1'), (2'), (3'), (4'), (5'), and (6'). According to this aspect, the attachment lens can be preferably used as an attachment lens in an analysis apparatus using ultraviolet light and furthermore, can further suppress deterioration in the flatness of an image plane and chromatic aberration in the whole optical system including the imaging lens and the attachment lens.

$$(9') \; -1.260 \leq \varphi1/n1 \leq 0.220$$

$$(10') \; 0.630 \leq f2/f \leq 2.85$$

$$(11') \; 0.0100 \leq \varphi2/\nu2 \leq 0.0285$$

n1: a refractive index of the first lens with respect to the d line, and
$\nu2$: an Abbe number of the second lens.

The attachment lens of the above embodiment is preferably used even when a flat optical element is inserted between an observation target and the first lens. The attachment lens of the above embodiment, in spite of its small number of necessary lenses, can suppress deterioration in the flatness of an image plane and chromatic aberration in the whole optical system including the imaging lens and the attachment lens. In short, since the total thickness of the attachment lens can be small, the attachment lens is preferably used even in application in which a flat optical element is inserted to between an observation target and the first lens while there is a limitation to the distance between the imaging lens and the observation target.

The flat optical element may be, for example, a wavelength filter.

The attachment lens of the above embodiment may be attached to, for example, a lens of a camera in a mobile terminal.

## Advantageous Effect of Invention

The present invention can provide an attachment lens that does not deteriorate the whole optical performance even if mounted to an existing imaging lens, and enables a fine target object to be observed with a wide field of view and high resolution.

## Brief Description of Drawings

[Figure 1] Figure 1 is a schematic cross-sectional view showing an optical system when the attachment lens of the present embodiment is used.
[Figure 2] Figure 2 is a schematic cross-sectional view showing an optical system of Numerical Example 2.
[Figure 3] Figure 3 is a schematic cross-sectional view showing an optical system of Numerical Example 3.
[Figure 4] Figure 4 is a schematic cross-sectional view showing an optical system of Numerical Example 4.
[Figure 5] Figure 5 is a schematic cross-sectional view showing an optical system of Numerical Example 5.
[Figure 6] Figure 6 is a schematic cross-sectional view showing an optical system of Numerical Example 6.
[Figure 7] Figure 7 is a diagram showing surfaces R1 to R11, and thicknesses (distances) d1 to d10 in Numerical Example 1.

## Description of Embodiments

Hereinafter, the mode for carrying out the present invention (hereinafter, referred to as the "present embodiment") will be described in detail with reference to the drawings. However, the present invention is not limited thereby, and various changes or modifications can be made in the present invention without departing from the spirit of the present invention. In the description of the drawings given below, the same or similar numerals or symbols are used to designate the same or similar portions. The drawings are schematic and do not necessarily correspond to actual dimensions, ratios, or the like. Portions differing in dimensional relationship or ratio may also be included between the drawings.

[Attachment lens]

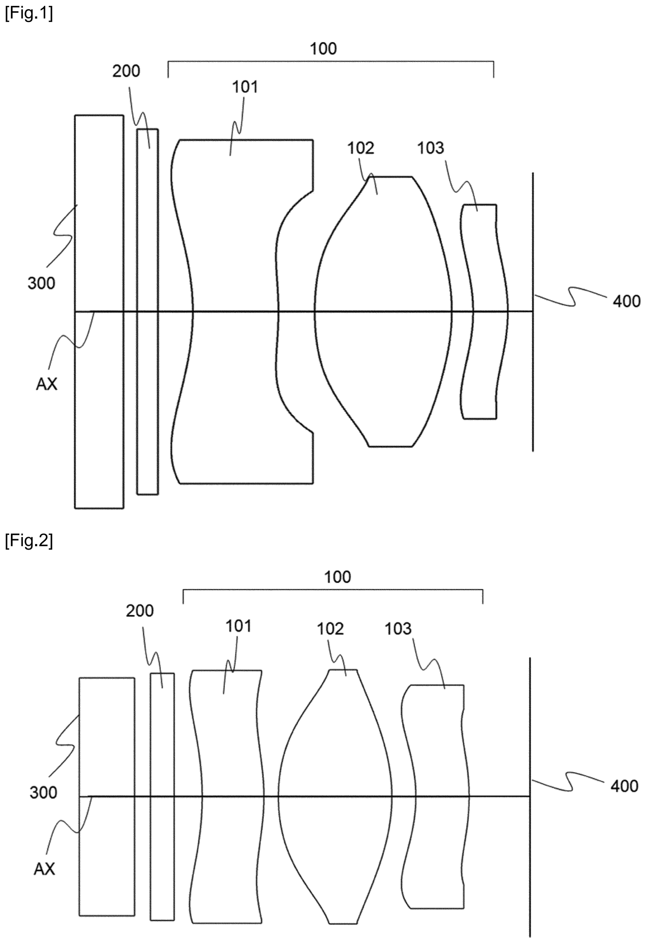

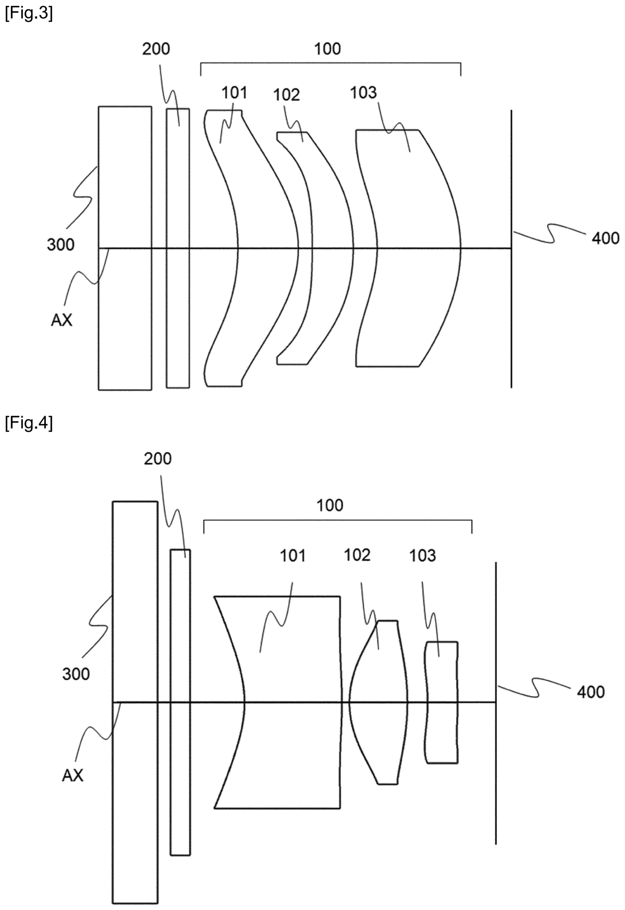

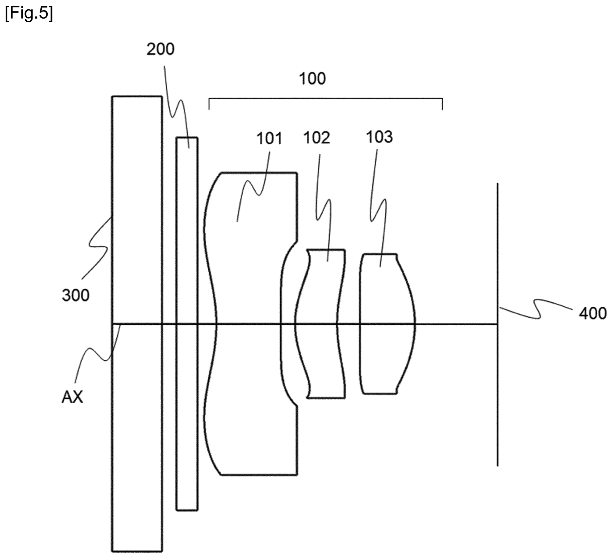

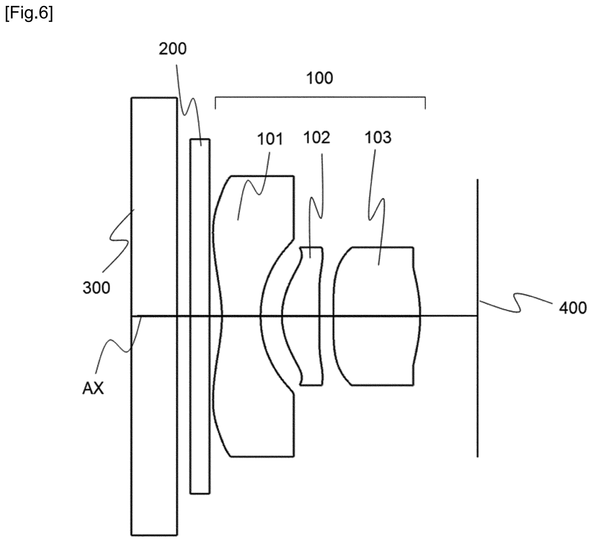

As shown in Figure 1, an attachment lens 100 according to the present embodiment comprises a first lens 101, a second lens 102 having positive optical power, and a third lens 103 in order from an observation target side. Figure 1 shows an example in which the attachment lens 100 is mounted to an imaging lens (the placement surface of the imaging lens is represented by 400 in Figure 1) for observing an observation target placed on a sample stage 300 via a flat optical element 200. An optical axis AX of each of the attachment lens 100, the flat optical element 200, and the imaging lens is placed so as to substantially correspond to an observation site of the observation target. The observation target is placed on a surface on the attachment lens 100 side of the sample stage 300 or a surface on an opposite side. Figure 1 shows an aspect in which the first lens 101 has negative optical power, and the third lens 103 has negative optical power. The optical power of the first lens 101 may be positive or negative as shown in Figures 2 to 6 which correspond to Numerical Examples 2 to 6 mentioned later, and the optical power of the third lens 103 may be positive or negative as shown in Figures 2 to 6 which correspond to Numerical Examples 2 to 6 mentioned later.

The positive and negative optical power combination of the first lens and the third lens is not particularly limited and may be any combination of negative optical power and negative optical power, positive optical power and negative optical power, positive optical power and positive optical power, and positive optical power and negative optical power, of the first lens and the third lens, respectively.

Each of both surfaces of the first lens 101, the second lens 102, and the third lens 103 is an aspheric surface. The attachment lens 100 satisfies the following expressions (1), (2), (3), (4), (5), and (6):

$$(1)\ -10.0 \le f1/f \le 8.00$$

$$(2)\ -0.1500 \le \varphi1/\nu1 \le 0.0500$$

$$(3)\ 0.100 \le \varphi2/n2 \le 2.000$$

$$(4)\ -80.0 \le f3/f \le 30.0$$

$$(5)\ -0.300 \le \varphi3/n3 \le 0.900$$

$$(6)\ -0.0200 \le \varphi3/\nu3 \le 0.0500$$

f: a focal length of the entire system of the attachment lens with respect to the d line,
f1: a focal length of the first lens with respect to the d line,
$\phi1$: a product of power of the first lens with respect to the d line and f, expressed as f/f1,
$\nu1$: an Abbe number of the first lens,
f2: a focal length of the second lens with respect to the d line,
$\phi2$: a product of power of the second lens with respect to the d line and f, expressed as f/f2,
n2: a refractive index of the second lens with respect to the d line,
f3: a focal length of the third lens with respect to the d line,
$\phi3$: a product of power of the third lens with respect to the d line and f, expressed as f/f3,
n3: a refractive index of the third lens with respect to the d line, and
$\nu3$: an Abbe number of the third lens.

In the present specification, the Abbe number is a value $\nu_d$ defined according to the following expression using a refractive index $n_d$ according to the Fraunhofer's d line (587.56 nm), a refractive index $n_F$ with respect to the F line (486.1 nm), and a refractive index $n_C$ with respect to the C line (656.3 nm).

$$\nu_d = (n_d - 1) / (n_F - n_C)$$

The term "lens has positive optical power" means that the power of the lens with respect to the d line, i.e., the reciprocal of the focal length of the lens with respect to the d line, is positive. The term "lens has negative optical power" means that the power of the lens with respect to the d line, i.e., the reciprocal of the focal length of the lens with respect to the d line, is negative.

The expressions (1) and (4) each define the ratio of the focal length of the first lens 101 or the third lens 103 to the focal length of the entire system of the attachment lens 100. The ratio of the focal length of the second lens 102 to the focal length of the entire system of the attachment lens 100 will be mentioned later and can be adjusted such that a desired focal length f of the entire system is obtained in the attachment lens 100 in a range that satisfies the expressions (1) to (6).

f1/f may be -9.00 or more, -8.50 or more, -3.00 or more, -2.30 or more, -1.40 or more, -0.50 or more, 1.50 or more, 2.80 or more, or 5.00 or more in the range of the expression (1). f1/f may be 6.00 or less, 5.60 or less, 5.00 or less, 3.20 or less, 0.50 or less, -0.20 or less, -0.40 or less, -1.00 or less, -1.50 or less, -2.10 or less, or -7.00 or less in the range of the expression (1).

f3/f may be -70.0 or more, -67.0 or more, -30.0 or more, -15.0 or more, -7.20 or more, -5.10 or more, 0.50 or more, 1.25 or more, 10.0 or more, 15.0 or more, or 18.0 or more in the range of the expression (4). f3/f may be 25.0 or less, 20.0 or less, 10.0 or less, 3.00 or less, 2.00 or less, 1.50 or less, 1.05 or less, -3.00 or less, -7.00 or less, -25.0 or less, -60.0 or less, or -65.0 or less in the range of the expression (4).

Each value of f, f1, and f3 is not particularly limited because the value may be appropriately adjusted by so-called scaling, which changes the size of the optical system while maintaining the relationship of each configuration of the attachment lens 100. f may be, for example, 1.10 mm or more and 10.0 mm or less, may be 1.50 mm or more and 8.00 mm or less, or may be 2.00 mm or more and 5.00 mm or less. Provided that f is set, f1 and f3 are designed so as to satisfy the expressions (1) and (4), respectively.

f may be adjusted depending on the focal length of the imaging lens and a desired magnification ratio and the like. The magnification ratio of the attachment lens means the ratio of an image size in the presence of the mounted attachment lens to an image size in the absence of the mounted attachment lens. A magnification ratio $\beta$ depends on a focal length $f_{400}$ of the imaging lens, the focal length f of the attachment lens, and the distance between the imaging lens and the attachment lens, for example.

The magnification ratio $\beta$ of the attachment lens 100 is preferably larger than 1.00, more preferably 1.10 or more, further preferably 1.20 or more. The focal length f of the attachment lens 100 may be appropriately adjusted such that $\beta$ falls within the range described above, depending on a value such as the focal length $f_{400}$ of the imaging lens.

The expressions (2) and (6) each define a value of the ratio of the power to the Abbe number of each lens normalized with the power (1/f) of the attachment lens 100 as to the first lens 101 and the third lens 103. In an optical system including a plurality of lenses, chromatic aberration can be suppressed in the whole optical system when the total ratio of the power to the Abbe number of the lenses approaches 0. In the attachment lens 100, $\phi1/\nu1$ and $\phi3/\nu3$ are defined by the expressions (2) and (6), respectively. Therefore, the total ratio in the attachment lens 100 can be allowed to approach 0 by appropriately adjusting the value of the ratio of the power to the Abbe number of the second lens 102 normalized with the power (1/f) of the attachment lens 100. This can reduce chromatic aberration in the attachment lens 100.

$\phi1/\nu1$ may be -0.1500 or more, -0.0900 or more, -0.0500 or more, -0.0350 or more, -0.0200 or more, -0.0065 or more, 0.0030 or more, 0.0050 or more, or 0.0090 or more in the range of the expression (2). $\phi1/\nu1$ may be 0.0200 or less, 0.0150 or less, 0.0080 or less, 0.0060 or less, -0.0055 or less, -0.0150 or less, -0.0300 or less, -0.0700 or less, or -0.0800 or less in the range of the expression (2).

$\phi3/\nu3$ may be -0.0120 or more, -0.0090 or more, -0.0060 or more, -0.0010 or more, 0.0010 or more, 0.0020 or more, 0.0080 or more, 0.0120 or more, or 0.0170 or more in the range of the expression (6). $\phi3/\nu3$ may be 0.0200 or less, 0.0180 or less, 0.0140 or less, 0.0040 or less, 0.0025 or less, -0.0005 or less, -0.0040 or less, - 0.0055 or less, or -0.0080 or less in the range of the expression (6).

The value of v1 is not particularly limited as long as $\phi1/\nu1$ satisfies the expression (2). The value may be, for example, 10 or more and 100 or less and is preferably 15 or more and 90 or less, more preferably 18 or more and 70 or less, further preferably 19 or more and 60 or less.

The value of v3 is not particularly limited as long as $\phi3/\nu3$ satisfies the expression (6). The value may be, for example, 10 or more and 100 or less and is preferably 15 or more and 90 or less, more preferably 18 or more and 75 or less, further preferably 19 or more and 70 or less, still further preferably 22 or more and 60 or less.

The magnitude relationship between v1 and v3 is not particularly limited, and v1 may be larger, or v3 may be larger. The absolute value of the difference between v1 and v3 is more preferably larger by 10 or more or 20 or more. In this case, the upper limit value of the absolute value of the difference between v1 and v3 is not particularly limited and may be, for example, 100, 80, 60, 50, or 40.

The expressions (3) and (5) each define a value of the ratio of the power to the refractive index of each lens normalized with the power (1/f) of the attachment lens 100 as to the second lens 102 and the third lens 103. In an optical system including a plurality of lenses, the flatness of an image plane of the whole optical system is improved, i.e., the image plane is prevented from being curved, when the total ratio of the power to the refractive index of the lenses approaches 0. The total ratio of the power to the refractive index of the lenses or a value of the total ratio normalized with the power of the entire optical system is also called Petzval sum. In the attachment lens 100, $\phi2/n2$ and $\phi3/n3$ are defined by the expressions (3) and (5), respectively. Therefore, the Petzval sum in the attachment lens 100 can be allowed to approach 0 by appropriately adjusting the value of the ratio of the power to the refractive index of the first lens 101 normalized with the power (1/f) of the attachment lens 100. This can prevent deterioration in the flatness of an image plane of the attachment lens 100. $\phi i$ (i = 1, 2, or 3) is also interpreted as the ratio of the power of the ith lens (1/fi) (i = 1, 2, or 3) with respect to the d line to the power of the entire system of the attachment lens (1/f) with respect to the d line.

$\phi2/n2$ may be 0.150 or more, 0.200 or more, 0.380 or more, 0.500 or more, 0.600 or more, 0.800 or more, or 0.950 or more in the range of the expression (3). $\phi2/n2$ may be 1.500 or less, 1.100 or less, 0.700 or less, 0.450 or less, 0.300 or less, or 0.250 or less in the range of the expression (3).

$\phi3/n3$ may be -0.250 or more, -0.170 or more, -0.120 or more, -0.090 or more, -0.030 or more, -0.010 or more, 0.010 or more, 0.030 or more, 0.200 or more, 0.300 or more, 0.480 or more, or 0.620 or more in the range of the expression (5). $\phi3/n3$ may be 0.800 or less, 0.640 or less, 0.500 or less, 0.100 or less, 0.040 or less, - 0.005 or less, -0.060 or less, -0.080 or less, or -0.110 or less in the range of the expression (5).

The value of n2 is not particularly limited as long as $\phi2/n2$ satisfies the expression (3). The value may be, for example, 1.20 or more and 2.00 or less and is preferably 1.30 or more and 1.80 or less, more preferably 1.40 or more and 1.75 or less, further preferably 1.45 or more and 1.75 or less, still further preferably 1.50 or more and 1.70 or less.

The value of n3 is not particularly limited as long as $\phi3/n3$ satisfies the expression (5). The value may be, for example, 1.20 or more and 2.00 or less and is preferably 1.30 or more and 1.80 or less, more preferably 1.40 or more and 1.75 or less, further preferably 1.45 or more and 1.75 or less, still further preferably 1.50 or more and 1.70 or less.

The magnitude relationship between n2 and n3 is not particularly limited, and n2 may be larger, or n3 may be larger. The absolute value of the difference between n2 and n3 may be larger by 0.03 or more, 0.05 or more, or 0.07 or more. In this case, the upper limit value of the absolute value of the difference between n2 and n3 is not particularly limited and may be, for example, 0.50, 0.40, 0.30, 0.20, or 0.10.

The attachment lens 100 preferably further satisfies the following expressions (7) and (8):

$$(7)\ 0.000 \leq P \leq 0.800$$

$$(8)\ \text{-0.0600} \leq Q \leq 0.0500$$

P: the sum of $\phi1/n1$, $\phi2/n2$, and $\phi3/n3$,
Q: the sum of $\phi1/\nu1$, $\phi2/\nu2$, and $\phi3/\nu3$,
n1: a refractive index of the first lens with respect to the d line, and
$\nu2$: an Abbe number of the second lens.

P in the expression (7) is a value corresponding to the Petzval sum. In the attachment lens 100, the first lens 101, the second lens 102, and the third lens 103 are aspheric lenses. Therefore, high flatness can be achieved for the whole optical system as long as the second lens 102 and the third lens 103 satisfy the expressions (3) and (5), respectively. When P satisfies the expressions (7), higher flatness can be achieved for the whole optical system.

P may be 0.050 or more, 0.160 or more, 0.200 or more, 0.250 or more, 0.400 or more, 0.550 or more, 0.570 or more, or 0.650 or more in the range of the expression (7). P is preferably 0.680 or less and may be 0.600 or less, 0.570 or less, 0.480 or less, 0.280 or less, or 0.230 or less in the range of the expression (7).

Q in the expression (8) is a value related mainly to chromatic aberration of the attachment lens 100. In the attachment lens 100, the first lens 101, the second lens 102, and the third lens 103 are aspheric lenses. Therefore, chromatic aberration can be suppressed for the whole optical system as long as the first lens 101 and the third lens 103 satisfy the expressions (2) and (6), respectively. When Q satisfies the expressions (8), chromatic aberration can be more reduced for the whole optical system.

Q is preferably -0.0450 or more, more preferably -0.0300 or more, and may be -0.0110 or more, -0.0050 or more, 0.0100 or more, 0.0200 or more, or 0.0215 or more in the range of the expression (8). Q is preferably 0.0400 or less, more preferably 0.0250 or less, and may be 0.0220 or less, 0.0120 or less, -0.0030 or less, -0.0095 or less, -0.0280, or -0.0430 or less in the range of the expression (8).

The attachment lens 100 may satisfy the following expressions (2A), (3A), (5A), (6A), (7A), and (8A) instead of the expressions (2), (3), (5), (6), (7), and (8):

$$(2A)\ \text{-0.0400} \leq 1/f1\nu1 \leq 0.0100$$

$$(3A)\ 0.050 \leq 1/f2n2 \leq 0.400$$

$$(5A)\ \text{-0.100} \leq 1/f3n3 \leq 0.300$$

$$(6A)\ \text{-0.0080} \leq 1/f3\nu3 \leq 0.0100$$

$$(7A)\ 0.000 \leq P' \leq 0.650$$

$$(8A)\ \text{-0.0200} \leq Q' \leq 0.0200$$

P': the sum of 1/f1n1, 1/f2n2, 1/f3n3, and
Q': the sum of 1/f1v1, 1/f2v2, and 1/f3v3.

1/f1$\nu$1 may be -0.0260 or more, -0.0110 or more, -0.0090 or more, -0.0020 or more, or 0.0030 or more in the range of the expression (2A). 1/f1v1 may be 0.0040 or less, 0.0035 or less, -0.0010 or less, -0.0080 or less, -0.0100 or less, or -0.0240 or less in the range of the expression (2A).

1/f2n2 may be 0.100 or more, 0.120 or more, 0.160 or more, 0.250 or more, 0.280 or more, or 0.300 or more in the range of the expression (3A). 1/f2n2 may be 0.330 or less, 0.300 or less, 0.270 or less, 0.180 or less, 0.140 or less, or 0.120 or less in the range of the expression (3A).

1/f3n3 may be -0.060 or more, -0.040 or more, -0.010 or more, 0.015 or more, 0.130 or more, or 0.190 or more in the range of the expression (5A). 1/f3n3 may be 0.210 or less, 0.150 or less, 0.030 or less, -0.001 or less, -0.030 or less, or -0.050 or less in the range of the expression (5A).

1/f3v3 may be -0.0042 or more, -0.0025 or more, -0.0005 or more, 0.0010 or more, 0.0040 or more, or 0.0050 or more in the range of the expression (6A). 1/f3v3 may be 0.0060 or less, 0.0045 or less, 0.0015 or less, -0.0001 or less, -0.0020 or less, or -0.0050 or less in the range of the expression (6A).

P' and Q' are values obtained by dividing P and Q, respectively, by f.

P' may be 0.020 or more, 0.030 or more, 0.070 or more, 0.100 or more, 0.150 or more, 0.180 or more, or 0.200 or more in the range of the expression (7A). P' is preferably 0.500 or less, more preferably 0.300 or less, and may be 0.250 or less, 0.190 or less, 0.160 or less, or 0.110 or less in the range of the expression (7A).

Q' is preferably -0.0140 or more and may be -0.0050 or more, -0.0010 or more, 0.0000, 0.0030, or 0.0080 or more in the range of the expression (8A). Q' is preferably 0.0140 or less and may be 0.0090 or less, 0.0040 or less, 0.0000 or less, or -0.0045 or less in the range of the expression (8A).

The attachment lens 100 preferably satisfies the expressions (9), (10), and (11) given below. The attachment lens 100 preferably satisfies the following expressions (9), (10), and (11) instead of the expressions (1) to (6) and more preferably satisfies the following expressions (9), (10), and (11) in addition to the expressions (1) to (8).

$$(9)\ -1.500 \leq \varphi1/n1 \leq 0.300$$

$$(10)\ 0.500 \leq f2/f \leq 3.50$$

$$(11)\ 0.0050 \leq \varphi2/\nu2 \leq 0.0400$$

n1 and v2 are defined as mentioned above.

Since the attachment lens 100 satisfies the expressions (1) to (6), the attachment lens does not deteriorate the whole optical performance even when mounted to an existing imaging lens, and enables a fine target object to be observed with high resolution. The attachment lens 100 further satisfies the expressions (9) to (11) and can thereby further suppress deterioration in the flatness of an image plane and chromatic aberration in the whole optical system including the imaging lens and the attachment lens.

The expression (9) defines a value of the ratio of the power to the refractive index of the first lens 101 normalized with the power(1/f) of the attachment lens 100.

$\phi$1/n1 may be -1.260 or more, -0.600 or more, -0.500 or more, -0.350 or more, -0.280 or more, -0.080 or more, 0.050 or more, 0.100 or more, or 0.200 or more in the range of the expression (9). $\phi$1/n1 may be 0.220 or less, 0.150 or less, 0.110 or less, -0.060 or less, -0.150 or less, -0.250 or less, -0.300 or less, -0.450 or less, - 0.900 or less, or -1.200 or less in the range of the expression (9).

The value of n1 is not particularly limited. The value may be, for example, 1.10 or more and 2.00 or less and is preferably 1.20 or more and 1.90 or less, more preferably 1.30 or more and 1.80 or less, further preferably 1.40 or more and 1.70 or less. The magnitude relationship among n1, n2, and n3 is not particularly limited, and n1 may be larger than n2, or n1 may be smaller than n2. The absolute value of the difference between n1 and n2 may be larger by 0.03 or more, 0.05 or more, or 0.07 or more. In this case, the upper limit value of the absolute value of the difference between n1 and n2 is not particularly limited and may be, for example, 0.50, 0.40, 0.30, 0.20, or 0.15. n3 may be the same as n1, n1 may be larger than n3, or n1 may be smaller than n3.

The expression (10) defines the ratio of the focal length of the second lens 102 to the focal length of the entire system of the attachment lens 100.

f2/f may be 0.600 or more, 0.900 or more, 1.00 or more, 1.60 or more, 2.00 or more, or 2.70 or more in the range of the expression (10). f2/f may be 3.00 or less, 2.20 or less, 1.70 or less, 1.10 or less, 1.00 or less, or 0.700 or less in the range of the expression (10). The value of f2 is not particularly limited because the value may be appropriately adjusted by the scaling of the attachment lens 100.

The expression (11) defines a value of the ratio of the power to the Abbe number of the second lens 102 normalized with the power (1/f) of the attachment lens 100.

$\phi$2/v2 may be 0.0100 or more, 0.0140 or more, 0.0160 or more, 0.0170 or more, 0.0180 or more, 0.0200 or more, or 0.0270 or more in the range of the expression (11). $\phi$2/v2 may be 0.0280 or less, 0.0200 or less, 0.0190 or less, 0.0180 or less, 0.0170 or less, 0.0155 or less, or 0.0120 or less in the range of the expression (11).

The value of v2 is not particularly limited. The value may be, for example, 10 or more and 100 or less and is preferably 15 or more and 80 or less, more preferably 20 or more and 60 or less. The magnitude relationship among v1, v2, and v3 is not particularly limited, and v1 may be larger than v2, or v1 may be smaller than v2. The absolute value of the difference between v1 and v2 is more preferably larger by 10 or more or 20 or more. In this case, the upper limit value of the absolute value of the difference between v1 and v2 is not particularly limited and may be, for example, 100, 80, 60, 50, or 40. v3 may be the same as v2, v2 may be larger than v3, or v2 may be smaller than v3.

The attachment lens 100 may satisfy the following expressions (9A) and (11A) instead of the expressions (9) and (11):

$$\text{(9A) } -0.450 \leq 1/f1n1 \leq 0.200$$

$$\text{(11A) } 0.0015 \leq 1/f2v2 \leq 0.0150$$

1/f1n1 may be -0.380 or more, -0.160 or more, -0.140 or more, -0.030 or more, 0.030 or more, or 0.100 or more in the range of the expression (9A). 1/f1n1 may be 0.120 or less, 0.050 or less, -0.015 or less, -0.120 or less, -0.150 or less, or -0.370 or less in the range of the expression (9A).

1/f2v2 may be 0.0028 or more, 0.0035 or more, 0.0045 or more, 0.0070 or more, 0.0080 or more, or 0.0083 or more in the range of the expression (11A). 1/f2v2 may be 0.0090 or less, 0.0080 or less, 0.0075 or less, 0.0050 or less, or 0.0030 or less in the range of the expression (11A).

A material constituting each of the first lens 101, the second lens 102, and the third lens 103 is not particularly limited and may be, for example, an inorganic material such as glass, may be an organic material such as a resin, or may be a composite material of inorganic and organic materials combined.

The first lens 101, the second lens 102, and the third lens 103 are not particularly limited as long as each lens is constituted by a material that allows a wavelength of light for use in observation to pass through it. Each lens is preferably constituted by a non-fluorescent material. According to this aspect, the attachment lens, for example, when used in an analysis apparatus using ultraviolet light, can prevent fluorescence from being generated due to the ultraviolet light in each lens and from becoming noise in measurement. In short, when the first lens 101, the second lens 102, and the third lens 103 are formed from a non-fluorescent material, the resulting attachment lens can be preferably used as an attachment lens in an analysis apparatus using ultraviolet light.

In an aspect in which each of the first lens 101, the second lens 102, and the third lens 103 is constituted by a non-fluorescent material, the attachment lens 100 preferably satisfies the expressions (1'), (2'), (3'), (4'), (5'), and (6') given below, more preferably further satisfies the expressions (7') and (8') given below or the expressions (9'), (10'), and (11') given below, and further preferably further satisfies the expressions (7'), (8'), (9'), (10'), and (11') given below. According to this aspect, the attachment lens may be preferably used as an attachment lens in an analysis apparatus using ultraviolet light and furthermore, can further suppress deterioration in the flatness of an image plane and chromatic aberration in the whole optical system including the imaging lens and the attachment lens.

$$\text{(1') } -8.50 \leq f1/f \leq 5.60$$

$$\text{(2') } -0.0900 \leq \varphi1/v1 \leq 0.0150$$

$$\text{(3') } 0.200 \leq \varphi2/n2 \leq 1.100$$

$$\text{(4') } -67.0 \leq f3/f \leq 20.0$$

$$\text{(5') } -0.170 \leq \varphi3/n3 \leq 0.640$$

$$\text{(6') } -0.0090 \leq \varphi3/v3 \leq 0.0180$$

$$\text{(7') } 0.000 \leq P \leq 0.680$$

$$\text{(8') } -0.0450 \leq Q \leq 0.0250$$

$$(9') \ -1.260 \leq \varphi1/n1 \leq 0.220$$

$$(10') \ 0.630 \leq f2/f \leq 2.85$$

$$(11') \ 0.0100 \leq \varphi2/\nu2 \leq 0.0285$$

f, f1, f2, f3, n1, n2, n3, v1, v2, v3, $\phi$1, $\phi$2, $\phi$3, P, and Q are defined as mentioned above.

In this aspect, the attachment lens 100 may satisfy the following expressions (2A'), (3A'), (5A'), (6A'), (7A'), (8A'), (9A'), and (11A') instead of the expressions (2'), (3'), (5'), (6'), (7'), (8'), (10'), and (11'):

$$(2A') \ -0.0260 \leq 1/f1\nu1 \leq 0.0040$$

$$(3A') \ 0.100 \leq 1/f2n2 \leq 0.330$$

$$(5A') \ -0.060 \leq 1/f3n3 \leq 0.210$$

$$(6A') \ -0.0042 \leq 1/f3\nu3 \leq 0.0060$$

$$(7A') \ 0.020 \leq P' \leq 0.500$$

$$(8A') \ -0.0140 \leq Q' \leq 0.0140$$

$$(9A') \ -0.380 \leq 1/f1n1 \leq 0.120$$

$$(11A') \ 0.0028 \leq 1/f2\nu2 \leq 0.0090$$

P' and Q' are defined as mentioned above.

In the expressions (1') to (11'), the values of f1/f, $\phi$1/n1, $\phi$1/$\nu$1, f2/f, $\phi$2/n2, $\phi$2/$\nu$2, P, Q, f3/f, $\phi$3/n3, $\phi$3/$\nu$3, f, n1, n2, n3, v1, v2, and v3 may fall within ranges obtained by arbitrarily combining the upper limit values and the lower limit values listed in the expressions (1) to (11), in the ranges of the expressions (1') to (11'). In the expressions (2A'), (3A'), (5A'), (6A'), (7A'), (8A'), (9A'), and (11A'), the values of 1/f1n1, 1/f1v1, 1/f2n2, 1/f2v2, P', Q', 1/f3n3, and 1/f3v3 may fall within ranges obtained by arbitrarily combining the upper limit values and the lower limit values listed in the expressions (2A), (3A), (5A), (6A), (7A), (8A), (9A), and (11A).

The expressions (1') to (11') and (2A'), (3A'), (5A'), (6A'), (7A'), (8A'), (9A'), and (11A') are expressions that further limit the numerical ranges of the expressions (1) to (11) and (2A), (3A), (5A), (6A), (7A), (8A), (9A), and (11A). When each of the first lens 101, the second lens 102, and the third lens 103 is formed of a non-fluorescent material, the refractive index, the Abbe number, and the shape of each lens may be limited to some extent. When the numerical ranges of the expressions (1) to (11) are limited to the ranges of the expressions (1') to (11') and (2A'), (3A'), (5A'), (6A'), (7A'), (8A'), (9A'), and (11A'), the resulting attachment lens can further suppress deterioration in the flatness of an image plane and chromatic aberration in the whole optical system including the imaging lens and the attachment lens.

In one aspect of the attachment lens of the present embodiment, the expressions (1) to (6) and (9) to (11) may be the following expressions (1-1) to (6-1) and (9-1) to (11-1):

$$(1-1) \ -10.0 \leq f1/f \leq -7.00$$

$$(2-1) \ -0.0200 \leq \varphi1/\nu1 \leq -0.0055$$

$$(3-1) \ 0.600 \leq \varphi2/n2 \leq 1.100$$

$$(4\text{-}1)\ -80.0 \le f3/f \le -60.0$$

$$(5\text{-}1)\ -0.030 \le \varphi3/n3 \le -0.005$$

$$(6\text{-}1)\ -0.0060 \le \varphi3/\nu3 \le -0.0005$$

$$(9\text{-}1)\ -0.080 \le \varphi1/n1 \le -0.060$$

$$(10\text{-}1)\ 0.900 \le f2/f \le 1.10$$

$$(11\text{-}1)\ 0.0140 \le \varphi2/\nu2 \le 0.0200$$

In one aspect of the attachment lens of the present embodiment, the expressions (1) to (6) and (9) to (11) may be the following expressions (1-2) to (6-2) and (9-2) to (11-2):

$$(1\text{-}2)\ 5.00 \le f1/f \le 6.00$$

$$(2\text{-}2)\ 0.0050 \le \varphi1/\nu1 \le 0.0150$$

$$(3\text{-}2)\ 0.600 \le \varphi2/n2 \le 0.700$$

$$(4\text{-}2)\ -15.0 \le f3/f \le -3.00$$

$$(5\text{-}2)\ -0.120 \le \varphi3/n3 \le -0.060$$

$$(6\text{-}2)\ -0.0090 \le \varphi3/\nu3 \le -0.0040$$

$$(9\text{-}2)\ 0.050 \le \varphi1/n1 \le 0.150$$

$$(10\text{-}2)\ 0.900 \le f2/f \le 1.10$$

$$(11\text{-}2)\ 0.0160 \le \varphi2/\nu2 \le 0.0200$$

In one aspect of the attachment lens of the present embodiment, the expressions (1) to (6) and (9) to (11) may be the following expressions (1-3) to (6-3) and (9-3) to (11-3):

$$(1\text{-}3)\ 1.50 \le f1/f \le 5.00$$

$$(2\text{-}3)\ 0.0030 \le \varphi1/\nu1 \le 0.0080$$

$$(3\text{-}3)\ 0.150 \le \varphi2/n2 \le 0.300$$

$$(4\text{-}3)\ 15.0 \le f3/f \le 25.0$$

$$(5\text{-}3)\ 0.010 \leq \varphi3/n3 \leq 0.100$$

$$(6\text{-}3)\ 0.0010 \leq \varphi3/\nu3 \leq 0.0040$$

$$(9\text{-}3)\ 0.100 \leq \varphi1/n1 \leq 0.300$$

$$(10\text{-}3)\ 2.00 \leq f2/f \leq 3.50$$

$$(11\text{-}3)\ 0.0100 \leq \varphi2/\nu2 \leq 0.0190$$

In one aspect of the attachment lens of the present embodiment, the expressions (1) to (6) and (9) to (11) may be the following expressions (1-4) to (6-4) and (9-4) to (11-4):

$$(1\text{-}4)\ \text{-}3.00 \leq f1/f \leq \text{-}1.50$$

$$(2\text{-}4)\ \text{-}0.0350 \leq \varphi1/\nu1 \leq \text{-}0.0055$$

$$(3\text{-}4)\ 0.500 \leq \varphi2/n2 \leq 0.700$$

$$(4\text{-}4)\ \text{-}7.20 \leq f3/f \leq \text{-}3.00$$

$$(5\text{-}4)\ \text{-}0.170 \leq \varphi3/n3 \leq \text{-}0.080$$

$$(6\text{-}4)\ \text{-}0.0120 \leq \varphi3/\nu3 \leq \text{-}0.0055$$

$$(9\text{-}4)\ \text{-}0.350 \leq \varphi1/n1 \leq \text{-}0.150$$

$$(10\text{-}4)\ 0.900 \leq f2/f \leq 1.70$$

$$(11\text{-}4)\ 0.0050 \leq \varphi2/\nu2 \leq 0.0200$$

In one aspect of the attachment lens of the present embodiment, the expressions (1) to (6) and (9) to (11) may be the following expressions (1-5) to (6-5) and (9-5) to (11-5):

$$(1\text{-}5)\ \text{-}2.30 \leq f1/f \leq \text{-}1.00$$

$$(2\text{-}5)\ \text{-}0.0500 \leq \varphi1/\nu1 \leq \text{-}0.0150$$

$$(3\text{-}5)\ 0.300 \leq \varphi2/n2 \leq 0.640$$

$$(4\text{-}5)\ 0.50 \leq f3/f \leq 2.00$$

$$(5\text{-}5)\ 0.480 \leq \varphi3/n3 \leq 0.800$$

$$(6-5)\ 0.0120 \le \varphi 3/v3 \le 0.0500$$

$$(9-5)\ -0.600 \le \varphi 1/n1 \le -0.300$$

$$(10-5)\ 1.00 \le f2/f \le 2.20$$

$$(11-5)\ 0.0050 \le \varphi 2/v2 \le 0.170$$

In one aspect of the attachment lens of the present embodiment, the expressions (1) to (6) and (9) to (11) may be the following expressions (1-6) to (6-6) and (9-6) to (11-6):

$$(1-6)\ -1.40 \le f1/f \le -0.20$$

$$(2-6)\ -0.1500 \le \varphi 1/v1 \le -0.0700$$

$$(3-6)\ 0.800 \le \varphi 2/n2 \le 1.500$$

$$(4-6)\ 0.50 \le f3/f \le 3.00$$

$$(5-6)\ 0.300 \le \varphi 3/n3 \le 0.640$$

$$(6-6)\ 0.0080 \le \varphi 3/v3 \le 0.0200$$

$$(9-6)\ -1.500 \le \varphi 1/n1 \le -0.900$$

$$(10-6)\ 0.500 \le f2/f \le 1.00$$

$$(11-6)\ 0.0200 \le \varphi 2/v2 \le 0.0400$$

The present embodiment is not limited by the aspects mentioned above, as a matter of course. In each expression of the above aspects, the values of f1/f, $\phi 1/n1$, $\phi 1/v1$, f2/f, $\phi 2/n2$, $\phi 2/v2$, f3/f, $\phi 3/n3$, $\phi 3/v3$, f, n1, n2, n3, v1, v2, and v3 may fall within ranges obtained by arbitrarily combining the upper limit values and the lower limit values listed in the expressions (1) to (11), in the ranges of the above expressions.

The attachment lens 100 of the present embodiment enables a fine target object to be observed with a wide field of view. A half angle of view, $\omega$, of the attachment lens 100 is preferably 15 degrees or more, more preferably 20 degrees or more, further preferably 30 degrees or more, and may be 40 degrees or more, 45 degrees or more, 50 degrees or more, or 55 degrees or more. The upper limit value of the half angle of view, $\omega$, is not particularly limited and may be, for example, 70 degrees, 65 degrees, or 60 degrees.

[Application]

The attachment lens 100 is mounted, for use, in an imaging lens, and an observation target is observed via the attachment lens 100. The imaging lens is not particularly limited and may be, for example, an imaging lens for information processing terminals such as smartphones and tablets or may be an imaging lens for cameras or microscopes.

Figure 1 shows an example in which the flat optical element 200 is inserted to between the observation target and the first lens 101 of the attachment lens 100. The flat optical element 200 is a substantially flat plate-like optical element and may be, for example, a protective lens for protecting the attachment lens 100, a wavelength filter that allows a specific wavelength to pass through it or cuts off a specific wavelength, a polarizer, or a retarder.

The attachment lens 100 is constituted by three lenses and does not require many lenses. Therefore, the attachment lens tends to be able to have a small thickness as a whole. Thus, even in the case of requiring decreasing the focal length f or in the case of requiring narrowing the interval between the attachment lens 100 and the observation target, an optical system is easily designed such that an optical element other than the attachment lens 100 is inserted to between the observation target and the attachment lens. In short, the attachment lens 100 can be preferably used even in application very difficult to design optically in such a way that another optical element such as the flat optical element 200 is inserted to between the observation target and the first lens 101. The attachment lens 100 can also be preferably used, as a matter of course, in application in which no other optical element is inserted to between the observation target and the first lens 101.

Thus, the attachment lens 100 may be used in, for example, fluorescent analysis or luminescent analysis. In this case, the flat optical element 200 may be a wavelength filter that selectively allows light at a wavelength emitted from a fluorescent material or a luminescent material contained in the observation target to pass through it. The wavelength filter may cut off light at an excitation light wavelength against the fluorescent material.

The attachment lens of the present embodiment may be used, as a matter of course, in application other than those described above as long as the attachment lens used is mounted to an imaging lens. The attachment lens of the present embodiment may be used in, for example, the aspect of Figure 1 from which the flat optical element 200 is omitted, or another optical element may be inserted instead of the flat optical element 200 or in addition to the flat optical element 200 to between the observation target and the first lens 101.

[Numerical Examples]

Hereinafter, Numerical Examples of the attachment lens 100 mentioned above will be described. However, the present invention is not limited by these examples. In Numerical Examples given below, the unit of a length is indicated in mm.

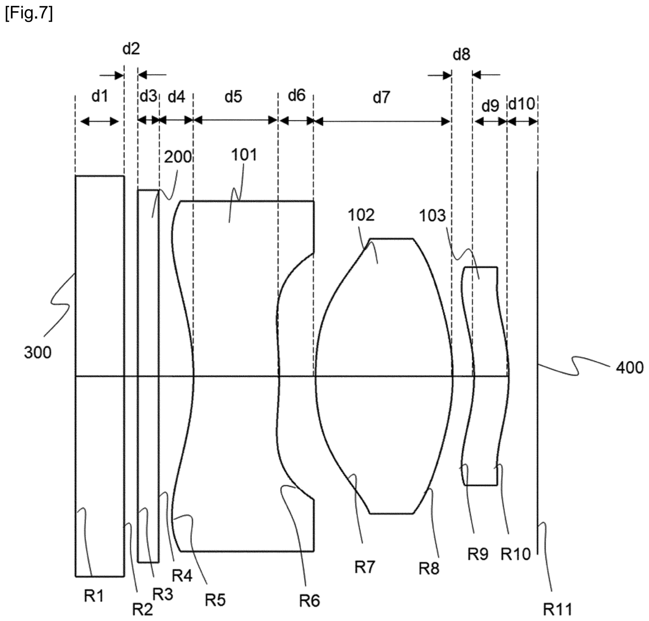

Figures 1 to 6 show schematic cross-sectional views of optical systems corresponding to Numerical Examples given below. Figures 1 to 6 correspond to Numerical Examples 1 to 6, respectively, mentioned later. Figure 7 shows each parameter of the optical system with Numerical Example 1 taken as a representative. R1 to R10 denote in order a first principal surface of the sample stage 300, a second principal surface of the sample stage 300, a first principal surface of the flat optical element 200, a second principal surface of the flat optical element 200, a first principal surface of the first lens 101, a second principal surface of the first lens 101, a first principal surface of the second lens 102, a second principal surface of the second lens 102, a first principal surface of the third lens 103, and a second principal surface of the third lens 103. R11 denotes a placement position of the imaging lens. In this context, the observation target is placed on a surface R1.

In each Numerical Example, the refractive index and the Abbe number of the sample stage 300 were set to 1.531 and 56.0, respectively; the refractive index and the Abbe number of the flat optical element 200 were set to 1.523 and 54.5, respectively; and the refractive indexes and the Abbe numbers of the first to third lenses were set to the values described in Table 9 mentioned later.

Materials for use in the sample stage, the flat optical element, and each lens are not particularly limited as long as the materials satisfy the physical property values described in each Numerical Example. For example, the refractive index of 1.531 and the Abbe number of 56.0 in the sample stage 300 are obtained from a cycloolefin polymer (COP) or the like. Examples of the lens made of COP include ZEONEX manufactured by ZEON Corp. The refractive index and the Abbe number of the flat optical element 200 are obtained from a general commercially available UV cut filter or the like. The lenses having other refractive indexes and Abbe numbers are obtained from commercially available lenses or the like. Examples of such lenses include lupizeta manufactured by Mitsubishi Gas Chemical Co., Inc., OKP manufactured by Osaka Gas Chemicals Co., Ltd., APL manufactured by Mitsui Chemicals, Inc., and glass lenses (manufactured by Ohara, Inc., manufactured by SCHOTT, manufactured by Hoya Vision Care Company, and manufactured by Hikari Glass Co., Ltd.). Each Numerical Example is Numerical Example in which all the lenses are constituted by a non-fluorescent material.

Distances d1 to d10 in each Numerical Example are shown in the table below.

[Table 1]

| Symbol | Numerical Example | | | | | |
|---|---|---|---|---|---|---|
| | 1 | 2 | 3 | 4 | 5 | 6 |
| d1 | 0.700 | 0.700 | 0.700 | 0.700 | 0.700 | 0.700 |
| d2 | 0.200 | 0.200 | 0.200 | 0.200 | 0.200 | 0.200 |
| d3 | 0.300 | 0.300 | 0.300 | 0.300 | 0.300 | 0.300 |
| d4 | 0.505 | 0.356 | 0.642 | 0.846 | 0.262 | 0.186 |
| d5 | 1.238 | 0.782 | 0.798 | 1.510 | 0.905 | 0.592 |

(continued)

| Symbol | Numerical Example | | | | | |
|---|---|---|---|---|---|---|
| | 1 | 2 | 3 | 4 | 5 | 6 |
| d6 | 0.526 | 0.184 | 0.184 | 0.117 | 0.197 | 0.326 |
| d7 | 1.982 | 1.438 | 0.542 | 0.898 | 0.589 | 0.572 |
| d8 | 0.308 | 0.304 | 0.316 | 0.315 | 0.321 | 0.213 |
| d9 | 0.501 | 0.675 | 1.103 | 0.465 | 0.769 | 1.328 |
| d10 | 0.250 | 0.250 | 0.250 | 0.100 | 0.100 | 0.100 |

In each Numerical Example, R1, R2, R3, and R4 were flat surfaces. R5, R6, R7, R8, R9, and R10 were aspheric surfaces, and each surface is represented by the aspheric surface function given below. In the following expression, the optical axis direction was denoted as z; a coordinate orthogonal to the optical axis was denoted as y; K represents a constant of the cone; R represents a curvature radius; and a04, a06, a08, a10, a12, a14, and a16 each represent an aspheric coefficient.

$$z = \frac{\frac{y^2}{R}}{1 + \sqrt{1 - (1 + K)\left(\frac{y}{R}\right)^2}} + a04\,y^4 + a06\,y^6 + a08\,y^8 + a10\,y^{10} + a12\,y^{12} + a14\,y^{14} + a16\,y^{16}$$

In each Numerical Example, the curvature radiuses R of the surfaces R5 to R10 were set to the values shown in the table below. A negative curvature radius means having a convex curvature on the right side of Figure 7.

[Table 2]

| Surface | Numerical Example | | | | | |
|---|---|---|---|---|---|---|
| | 1 | 2 | 3 | 4 | 5 | 6 |
| R5 | -3.7788 | -3.9271 | -2.8825 | -1.8930 | -2.4517 | -2.3901 |
| R6 | -5.1954 | -2.9422 | -1.5892 | -6.8006 | -73.5824 | 1.9726 |
| R7 | 4.2798 | 2.3817 | -11.2791 | 1.5924 | 1.3057 | 1.1825 |
| R8 | -3.1022 | -2.3483 | -2.6633 | -3.8827 | 2.1651 | -17.9985 |
| R9 | -2.5822 | -2.0744 | -1.9432 | -2.7583 | 78.4813 | 34.6512 |
| R10 | -2.8230 | -2.8849 | -2.1875 | -5.0719 | -1.7371 | -2.5200 |

In each Numerical Example, the constant K of the cone and the aspheric coefficients a04, a06, a08, a10, a12, a14, and a16 were set to the values shown in the table below. In the following table, "E±x" means "×10±x".

(Numerical Example 1)

[Table 3]

| Surface | K | a04 | a06 | a08 | a10 | a12 | a14 | a16 |
|---|---|---|---|---|---|---|---|---|
| R5 | 0.0000 | 1.4041E-02 | 6.1114E-04 | 0 | 0 | 0 | 0 | 0 |
| R6 | -1.0000 | 6.6540E-02 | 1.0523E-03 | 0 | 0 | 0 | 0 | 0 |
| R7 | 0.0000 | 5.1570E-02 | -8.8561E-03 | 0 | 0 | 0 | 0 | 0 |
| R8 | -1.0000 | 2.3846E-02 | -4.1231E-03 | 0 | 0 | 0 | 0 | 0 |
| R9 | 0.0000 | 5.6351E-02 | 2.1406E-03 | 0 | 0 | 0 | 0 | 0 |

(continued)

| Surface | K | a04 | a06 | a08 | a10 | a12 | a14 | a16 |
|---------|-----|-----|-----|-----|-----|-----|-----|-----|
| R10 | 0.0000 | 4.2855E-02 | 5.2176E-03 | 0 | 0 | 0 | 0 | 0 |

(Numerical Example 2)

[Table 4]

| Surface | K | a04 | a06 | a08 | a10 | a12 | a14 | a16 |
|---------|-----|-----|-----|-----|-----|-----|-----|-----|
| R5 | 0.0000 | 8.1401E-03 | 8.9932E-03 | 0 | 0 | 0 | 0 | 0 |
| R6 | -1.0000 | 9.1910E-02 | -1.1839E-02 | 0 | 0 | 0 | 0 | 0 |
| R7 | 0.0000 | 6.1022E-02 | -2.3602E-02 | 0 | 0 | 0 | 0 | 0 |
| R8 | -1.0000 | 1.8146E-02 | 2.5718E-05 | 0 | 0 | 0 | 0 | 0 |
| R9 | 0.0000 | 5.7440E-02 | 2.7915E-02 | 0 | 0 | 0 | 0 | 0 |
| R10 | 0.0000 | 3.9900E-02 | 4.4084E-02 | 0 | 0 | 0 | 0 | 0 |

(Numerical Example 3)

[Table 5]

| Surface | K | a04 | a06 | a08 | a10 | a12 | a14 | a16 |
|---------|-----|-----|-----|-----|-----|-----|-----|-----|
| R5 | 0.0000 | -2.7575E-02 | 1.4219E-02 | 0 | 0 | 0 | 0 | 0 |
| R6 | -1.0000 | 2.5044E-02 | 5.5545E-04 | 0 | 0 | 0 | 0 | 0 |
| R7 | 0.0000 | -7.1724E-02 | -7.1257E-04 | 0 | 0 | 0 | 0 | 0 |
| R8 | -1.0000 | -5.5247E-02 | 1.3918E-02 | 0 | 0 | 0 | 0 | 0 |
| R9 | 0.0000 | 7.7874E-02 | 3.0478E-03 | 0 | 0 | 0 | 0 | 0 |
| R10 | 0.0000 | 2.3985E-02 | 2.4542E-04 | 0 | 0 | 0 | 0 | 0 |

(Numerical Example 4)

[Table 6]

| Surface | K | a04 | a06 | a08 | a10 | a12 | a14 | a16 |
|---------|-----|-----|-----|-----|-----|-----|-----|-----|
| R5 | 0.0000 | 9.4065E-02 | -2.2384E-02 | 4.8544.E-03 | 0 | 0 | 0 | 0 |
| R6 | -1.0000 | 6.6683E-02 | -3.0213E-02 | 5.7736.E-03 | 0 | 0 | 0 | 0 |
| R7 | 0.0000 | -1.4822E-02 | -4.0469E-02 | 3.8565.E-04 | 0 | 0 | 0 | 0 |
| R8 | -1.0000 | 1.4271E-03 | 1.6540E-02 | -3.4527.E-03 | 0 | 0 | 0 | 0 |
| R9 | 0.0000 | 1.5991E-01 | 3.4945E-02 | 0 | 0 | 0 | 0 | 0 |
| R10 | 0.0000 | 1.4392E-01 | 5.3116E-02 | 0 | 0 | 0 | 0 | 0 |

(Numerical Example 5)

[Table 7]

| Surface | K | a04 | a06 | a08 | a10 | a12 | a14 | a16 |
|---|---|---|---|---|---|---|---|---|
| R5 | 0.0000 | 8.0401E-02 | -3.4785E-03 | -1.4666.E-03 | 2.7592.E-04 | 0 | 0 | 0 |
| R6 | -1.0000 | -1.6770E-02 | 1.8244E-01 | -1.0873.E-01 | 2.8926.E-02 | 0 | 0 | 0 |
| R7 | 0.0000 | -2.6278E-01 | 1.5793E-01 | -1.5924.E-01 | 0 | 0 | 0 | 0 |
| R8 | -1.0000 | -1.2805E-01 | 3.0620E-03 | 3.5314.E-03 | 0 | 0 | 0 | 0 |
| R9 | 0.0000 | -5.3065E-02 | 8.7691E-02 | 0 | 0 | 0 | 0 | 0 |
| R10 | 0.0000 | 2.5628E-03 | 3.4624E-02 | 0 | 0 | 0 | 0 | 0 |

(Numerical Example 6)

[Table 8]

| Surface | K | a04 | a06 | a08 | a10 | a12 | a14 | a16 |
|---|---|---|---|---|---|---|---|---|
| R5 | 0.0000 | 1.6934E-01 | -9.2308E-02 | 3.5618.E-02 | -6.6159.E-03 | 4.7155.E-04 | 0 | 0 |
| R6 | -1.0000 | 8.2486E-02 | 3.0967E-02 | -1.9472.E-02 | 1.9606.E-01 | -6.0477.E-02 | 0 | 0 |
| R7 | 0.0000 | -1.6331E-01 | 1.1726E-01 | -1.8310.E-01 | -1.7695.E-02 | 0 | 0 | 0 |
| R8 | -1.0000 | 9.1149 E-02 | 2.5621E-01 | -4.2312.E-02 | 1.5190.E-01 | 0 | 0 | 0 |
| R9 | 0.0000 | 1.4316E-01 | 1.9460E-02 | 0 | 0 | 0 | 0 | 0 |
| R10 | 0.0000 | 2.5385E-02 | 5.4533E-02 | 0 | 0 | 0 | 0 | 0 |

Each parameter in each Numerical Example was the value shown in the table below. The symbols in the following table are defined as mentioned above.

[Table 9]

| Numerical Example | f | f1 | f2 | f3 | n1 | v1 | n2 | v2 | n3 | v3 |
|---|---|---|---|---|---|---|---|---|---|---|
| 1 | 3.748 | -31.807 | 3.646 | -248.859 | 1.671 | 19.28 | 1.545 | 55.93 | 1.636 | 23.92 |
| 2 | 2.401 | 13.251 | 2.431 | -17.162 | 1.671 | 19.28 | 1.545 | 55.93 | 1.636 | 23.92 |
| 3 | 1.870 | 5.758 | 5.320 | 36.223 | 1.509 | 56.32 | 1.640 | 23.50 | 1.636 | 23.92 |
| 4 | 2.060 | -4.684 | 2.201 | -10.311 | 1.636 | 23.92 | 1.545 | 56.00 | 1.636 | 23.92 |
| 5 | 3.066 | -4.007 | 5.004 | 3.132 | 1.636 | 23.92 | 1.531 | 55.75 | 1.545 | 56.00 |
| 6 | 3.282 | -1.614 | 2.097 | 4.370 | 1.636 | 23.92 | 1.535 | 56.07 | 1.545 | 55.99 |

| Numerical Example | f1/f | f2/f | f3/f | $\phi1/n1$ | $\phi2/n2$ | $\phi3/n3$ | P | $\phi1/v1$ | $\phi2/v2$ | $\phi3/v3$ | Q |
|---|---|---|---|---|---|---|---|---|---|---|---|
| 1 | -8.49 | 0.973 | -66.4 | -0.070 | 0.665 | -0.009 | 0.586 | -0.0061 | 0.0184 | -0.0006 | 0.0116 |
| 2 | 5.52 | 1.01 | -7.15 | 0.108 | 0.639 | -0.085 | 0.662 | 0.0094 | 0.0177 | -0.0058 | 0.0212 |
| 3 | 3.08 | 2.85 | 19.4 | 0.215 | 0.214 | 0.032 | 0.461 | 0.0058 | 0.0150 | 0.0022 | 0.0229 |
| 4 | -2.27 | 1.07 | -5.00 | -0.269 | 0.606 | -0.122 | 0.215 | -0.0184 | 0.0167 | -0.0084 | -0.0100 |
| 5 | -1.31 | 1.63 | 1.02 | -0.468 | 0.400 | 0.634 | 0.566 | -0.0320 | 0.0110 | 0.0175 | -0.0035 |
| 6 | -0.492 | 0.639 | 1.33 | -1.243 | 1.020 | 0.486 | 0.263 | -0.0850 | 0.0279 | 0.0134 | -0.0437 |

| Numerical Example | 1/f1n1 | 1/f2n2 | 1/f3n3 | P' | 1/f1v1 | 1/f2v2 | 1/f3v3 | Q' |
|---|---|---|---|---|---|---|---|---|
| 1 | -0.019 | 0.178 | -0.002 | 0.156 | -0.0016 | 0.0049 | -0.0002 | 0.0031 |
| 2 | 0.045 | 0.266 | -0.036 | 0.276 | 0.0039 | 0.0074 | -0.0024 | 0.0088 |
| 3 | 0.115 | 0.115 | 0.017 | 0.247 | 0.0031 | 0.0080 | 0.0012 | 0.0122 |
| 4 | -0.130 | 0.294 | -0.059 | 0.104 | -0.0089 | 0.0081 | -0.0041 | -0.0049 |
| 5 | -0.153 | 0.131 | 0.207 | 0.185 | -0.0104 | 0.0036 | 0.0057 | -0.0011 |
| 6 | -0.379 | 0.311 | 0.148 | 0.080 | -0.0259 | 0.0085 | 0.0041 | -0.0133 |

The attachment lens composed of the first lens 101, the second lens 102, and the third lens 103 in each Numerical Example had a focal length f, an effective F number, and a half angle of view, ω, of the values shown in the table below as overall characteristics. These results demonstrated that in proximity to an object to be imaged, the attachment lens of each Numerical Example allows for observation in a wide range, does not deteriorate the whole optical performance, and enables a fine target object to be observed with high resolution, even when mounted to an existing imaging lens.

[Table 10]

| Parameter | Numerical Example | | | | | |
|---|---|---|---|---|---|---|
| | 1 | 2 | 3 | 4 | 5 | 6 |
| f | 3.747 | 2.401 | 3.183 | 3.418 | 3.066 | 3.282 |
| ω (°) | 34.066 | 16.100 | 22.950 | 57.620 | 50.120 | 57.230 |
| Effective F number | 1.745 | 1.841 | 2.441 | 2.621 | 2.351 | 2.517 |

[Additional Remark]

The present invention includes the following embodiments.

[1] An attachment lens comprising a first lens having positive or negative optical power, a second lens having positive optical power, and a third lens having positive or negative optical power in order from an object side, wherein

each of both surfaces of the first lens, the second lens, and the third lens is an aspheric surface, and the attachment lens satisfies the following expressions (1), (2), (3), (4), (5), and (6):

$$(1) \; -10.0 \leq f1/f \leq 8.00$$

$$(2) \; -0.1500 \leq \varphi1/v1 \leq 0.0500$$

$$(3) \; 0.100 \leq \varphi2/n2 \leq 2.000$$

$$(4) \; -80.0 \leq f3/f \leq 30.0$$

$$(5) \; -0.300 \leq \varphi3/n3 \leq 0.900$$

$$(6) \; -0.0200 \leq \varphi3/v3 \leq 0.0500$$

f: a focal length of the entire system of the attachment lens with respect to the d line,
f1: a focal length of the first lens with respect to the d line,
$\phi1$: a product of power of the first lens with respect to the d line and f, expressed as f/f1,
v1: an Abbe number of the first lens,

f2: a focal length of the second lens with respect to the d line,

$\phi$2: a product of power of the second lens with respect to the d line and f, expressed as f/f2,

n2: a refractive index of the second lens with respect to the d line,

f3: a focal length of the third lens with respect to the d line,

$\phi$3: a product of power of the third lens with respect to the d line and f, expressed as f/f3,

n3: a refractive index of the third lens with respect to the d line, and

v3: an Abbe number of the third lens.

[2] The attachment lens according to [1], wherein the attachment lens further satisfies the following expressions (7) and (8):

$$(7)\ 0.000 \leq P \leq 0.510$$

$$(8)\ -0.0046 \leq Q \leq 0.0046$$

$$(7)\ 0.000 \leq P \leq 0.800$$

$$(8)\ -0.0600 \leq Q \leq 0.0500$$

P: the sum of $\phi$1/n1, $\phi$2/n2, and $\phi$3/n3,

Q: the sum of $\phi$1/v1, $\phi$2/v2, and $\phi$3/v3,

n1: a refractive index of the first lens with respect to the d line, and

v2: an Abbe number of the second lens.

[3] The attachment lens according to [1] or [2], wherein the attachment lens further satisfies the following expressions (9), (10), and (11):

$$(9)\ -1.500 \leq \varphi1/n1 \leq 0.300$$

$$(10)\ 0.500 \leq f2/f \leq 3.50$$

$$(11)\ 0.0050 \leq \varphi2/v2 \leq 0.0400$$

n1: a refractive index of the first lens with respect to the d line, and

v2: an Abbe number of the second lens.

[4] The attachment lens according to any one of [1] to [3], wherein each of the first lens, the second lens, and the third lens is formed of a non-fluorescent material.

[5] The attachment lens according to [4], wherein the attachment lens satisfies the following expressions (1'), (2'), (3'), (4'), (5'), and (6'):

$$(1')\ -8.50 \leq f1/f \leq 5.60$$

$$(2')\ -0.0900 \leq \varphi1/v1 \leq 0.0150$$

$$(3')\ 0.200 \leq \varphi2/n2 \leq 1.100$$

$$(4')\ -67.0 \leq f3/f \leq 20.0$$

$$(5') \ -0.170 \le \varphi3/n3 \le 0.640$$

$$(6') \ -0.0090 \le \varphi3/\nu3 \le 0.0180$$

[6] The attachment lens according to [4] or [5], wherein the attachment lens further satisfies the following expressions (7') and (8'):

$$(7') \ 0.000 \le P \le 0.680$$

$$(8') \ -0.0450 \le Q \le 0.0250$$

P: the sum of $\phi1/n1$, $\phi2/n2$, and $\phi3/n3$,
Q: the sum of $\phi1/\nu1$, $\phi2/\nu2$, and $\phi3/\nu3$,
n1: a refractive index of the first lens with respect to the d line, and
$\nu2$: an Abbe number of the second lens.

[7] The attachment lens according to any one of [4] to [6], wherein the attachment lens further satisfies the following expressions (9'), (10'), and (11'):

$$(9') \ -1.260 \le \varphi1/n1 \le 0.220$$

$$(10') \ 0.630 \le f2/f \le 2.85$$

$$(11') \ 0.0100 \le \varphi2/\nu2 \le 0.0285$$

n1: a refractive index of the first lens with respect to the d line, and
$\nu2$: an Abbe number of the second lens.

[8] The attachment lens according to any one of [1] to [7], adapted to be used with a flat optical element inserted between an observation target and the first lens.
[9] The attachment lens according to [8], wherein the flat optical element is a wavelength filter.
[10] The attachment lens according to any one of [1] to [9], wherein the attachment lens is attached to a lens of a camera of a mobile terminal.

**Reference Signs List**

100: attachment lens, 101: first lens, 102: second lens, 103: third lens, 200: flat optical element, 300: sample stage, and 400: placement surface of an imaging lens.

**Claims**

1.  An attachment lens comprising a first lens having positive or negative optical power, a second lens having positive optical power, and a third lens having positive or negative optical power in order from an object side,

    wherein each of both surfaces of the first lens, the second lens, and the third lens is an aspheric surface, and the attachment lens satisfies the following expressions (1), (2), (3), (4), (5), and (6):

$$(1) \ -10.0 \le f1/f \le 8.00$$

$$(2) \ -0.1500 \le \varphi1/\nu1 \le 0.0500$$

$$(3)\ 0.100 \le \varphi 2/n2 \le 2.000$$

$$(4)\ \text{-}80.0 \le f3/f \le 30.0$$

$$(5)\ \text{-}0.300 \le \varphi 3/n3 \le 0.900$$

$$(6)\ \text{-}0.0200 \le \varphi 3/\nu 3 \le 0.0500$$

f: a focal length of the entire system of the attachment lens with respect to the d line,
f1: a focal length of the first lens with respect to the d line,
$\phi 1$: a product of power of the first lens with respect to the d line and f, expressed as f/f1,
v1: an Abbe number of the first lens,
f2: a focal length of the second lens with respect to the d line,
$\phi 2$: a product of power of the second lens with respect to the d line and f, expressed as f/f2,
n2: a refractive index of the second lens with respect to the d line,
f3: a focal length of the third lens with respect to the d line,
$\phi 3$: a product of power of the third lens with respect to the d line and f, expressed as f/f3,
n3: a refractive index of the third lens with respect to the d line, and
v3: an Abbe number of the third lens.

2. The attachment lens according to claim 1, wherein the attachment lens further satisfies the following expressions (7) and (8):

$$(7)\ 0.000 \le P \le 0.800$$

$$(8)\ \text{-}0.0600 \le Q \le 0.0500$$

P: the sum of $\phi 1/n1$, $\phi 2/n2$, and $\phi 3/n3$,
Q: the sum of $\phi 1/\nu 1$, $\phi 2/\nu 2$, and $\phi 3/\nu 3$,
n1: a refractive index of the first lens with respect to the d line, and
v2: an Abbe number of the second lens.

3. The attachment lens according to claim 1 or 2, wherein the attachment lens further satisfies the following expressions (9), (10), and (11):

$$(9)\ \text{-}1.500 \le \varphi 1/n1 \le 0.300$$

$$(10)\ 0.500 \le f2/f \le 3.50$$

$$(11)\ 0.0050 \le \varphi 2/\nu 2 \le 0.0400$$

n1: a refractive index of the first lens with respect to the d line, and
v2: an Abbe number of the second lens.

4. The attachment lens according to claim 1, wherein each of the first lens, the second lens, and the third lens is formed of a non-fluorescent material.

5. The attachment lens according to claim 4, wherein the attachment lens satisfies the following expressions (1'), (2'), (3'), (4'), (5'), and (6'):

$$(1')\ \text{-}8.50 \le f1/f \le 5.60$$

$$(2') \ -0.0900 \le \varphi 1/\nu 1 \le 0.0150$$

$$(3') \ 0.200 \le \varphi 2/n2 \le 1.100$$

$$(4') \ -67.0 \le f3/f \le 20.0$$

$$(5') \ -0.170 \le \varphi 3/n3 \le 0.640$$

$$(6') \ -0.0090 \le \varphi 3/\nu 3 \le 0.0180.$$

6. The attachment lens according to claim 4 or 5, wherein the attachment lens further satisfies the following expressions (7') and (8'):

$$(7') \ 0.000 \le P \le 0.680$$

$$(8') \ -0.0450 \le Q \le 0.0250$$

P: the sum of $\phi 1/n1$, $\phi 2/n2$, and $\phi 3/n3$,
Q: the sum of $\phi 1/\nu 1$, $\phi 2/\nu 2$, and $\phi 3/\nu 3$,
n1: a refractive index of the first lens with respect to the d line, and
$\nu 2$: an Abbe number of the second lens.

7. The attachment lens according to claim 4 or 5, wherein the attachment lens further satisfies the following expressions (9'), (10'), and (11'):

$$(9') \ -1.260 \le \varphi 1/n1 \le 0.220$$

$$(10') \ 0.630 \le f2/f \le 2.85$$

$$(11') \ 0.0100 \le \varphi 2/\nu 2 \le 0.0285$$

n1: a refractive index of the first lens with respect to the d line, and
$\nu 2$: an Abbe number of the second lens.

8. The attachment lens according to claim 1 or 2, adapted to be used with a flat optical element inserted between an observation target and the first lens.

9. The attachment lens according to claim 8, wherein the flat optical element is a wavelength filter.

10. The attachment lens according to claim 1 or 2, wherein the attachment lens is attached to a lens of a camera of a mobile terminal.

[Fig.1]

[Fig.2]

[Fig.3]

[Fig.4]

[Fig.5]

[Fig.6]

[Fig.7]

## INTERNATIONAL SEARCH REPORT

| International application No. |
| --- |
| **PCT/JP2024/011557** |

| A. | CLASSIFICATION OF SUBJECT MATTER |
| --- | --- |

*G02B 15/10*(2006.01)i
FI: G02B15/10

According to International Patent Classification (IPC) or to both national classification and IPC

| B. | FIELDS SEARCHED |
| --- | --- |

Minimum documentation searched (classification system followed by classification symbols)

G02B9/00-17/08; G02B21/02-21/04; G02B525/00-25/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 9-288233 A (FUJI PHOTO FILM CO., LTD.) 04 November 1997 (1997-11-04) | 1-6, 10 |
| | examples 2-3 | |
| Y | | 8-9 |
| A | | 7 |
| X | JP 9-15494 A (NIKON CORPORATION) 17 January 1997 (1997-01-17) | 1-5, 10 |
| | example 2 | |
| Y | | 8-9 |
| A | | 6-7 |
| X | JP 2017-90772 A (CANON KABUSHIKI KAISHA) 25 May 2017 (2017-05-25) | 1, 4, 10 |
| | example 3, numerical data 3 | |
| Y | | 8-9 |
| A | | 2-3, 5-7 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 May 2024** | **04 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 692 887 A1**

**INTERNATIONAL SEARCH REPORT**

International application No.

**PCT/JP2024/011557**

## C. DOCUMENTS CONSIDERED TO BE RELEVANT

| Category* | Citation of document, with indication, where appropriate, of the relevant passages | Relevant to claim No. |
|---|---|---|
| Y | WO 2013/154122 A1 (KONICA MINOLTA, INC.) 17 October 2013 (2013-10-17) paragraph [0054], fig. 2 | 8-9 |

Form PCT/ISA/210 (second sheet) (July 2022)

30

## INTERNATIONAL SEARCH REPORT
### Information on patent family members

International application No.

**PCT/JP2024/011557**

| Patent document cited in search report | | | Publication date (day/month/year) | Patent family member(s) | | | Publication date (day/month/year) |
|---|---|---|---|---|---|---|---|
| JP | 9-288233 | A | 04 November 1997 | JP | 3588518 | B2 | |
| JP | 9-15494 | A | 17 January 1997 | (Family: none) | | | |
| JP | 2017-90772 | A | 25 May 2017 | JP | 6671930 | B2 | |
| WO | 2013/154122 | A1 | 17 October 2013 | (Family: none) | | | |

Form PCT/ISA/210 (patent family annex) (July 2022)

**EP 4 692 887 A1**

**Patent documents cited in the description**

- JP 2002214529 A
- JP 2020144177 A